# EUROPEAN PATENT SPECIFICATION

(11) **EP 2 572 579 B1**
(45) Date of publication and mention of the grant of the patent: **23.04.2014**
(21) Application number: 12185428.5
(22) Date of filing: 21.09.2012
(51) Int. Cl.: A01N 31/04, A01N 37/40, A01N 35/02, A01N 35/06, A01N 37/02, A01N 35/04, A01N 31/14, A01N 37/04, A01N 43/40, A01P 19/00

(54) **Compositions for attracting Tortricidae (fruit moths)**
Zusammensetzungen zum Anlocken von Tortricidae (Wicklern)
Compositions pour attirer des Tortricidae (les tordeuses)

(30) Priority: 22.09.2011 US 201161537588 P
(43) Date of publication of application: 27.03.2013
(73) Proprietor: Bioforsk, 1432 ÅS (NO)
(72) Inventor: Knudsen, Geir, K., 1405 Langhus (NO); Tasin, Marco, 38121 Trento (IT)
(74) Representative: Onsagers AS

(56) References cited:
- WO-A1-2004/028256
- WO-A2-2005/072526
- WO-A2-2008/012756
- US-B1- 6 190 652
- BENGTSSON ET AL.: ENTOMOLOGIA EXPERIMENTALIS ET APPLICATA, vol. 118, 2006, pages 77-85, XP055052166,
- Miryan Coracini ET AL: "Attraction of codling moth males to apple volatiles", Entomologia Experimentalis et Applicata, 1 January 2004 (2004-01-01), pages 1-10, XP055052169, Retrieved from the Internet: URL:http://onlinelibrary.wiley.com/store/1 0.1111/j.0013-8703.2004.00124.x/asset/j.00 13-8703.2004.00124.x.pdf?v=1&t=hcrg7f5q&s= cc46901b1d28ceb350ce1ca61577f2570d96ff0b [retrieved on 2013-02-04]
- GUNNILD JAASTAD ET AL: "Attractive plant volatiles as a control method against apple fruit moth (Argyresthia conjugella Zell.)?", ECOFRUIT - 11TH INTERNATIONAL CONFERENCE ON CULTIVATION TECHNIQUE AND PHYTOPATHOLOGICAL PROBLEMS IN ORGANIC FRUIT-GROWING: PROCEEDINGS TO THE CONFERENCE FROM 3RD FEBRUARY TO 5TH FEBRUARY 2004 AT WEINSBERG/GERMANY, 3 February 2004 (2004-02-03), pages 29-34, XP055052194, Weinsberg, Germany
- HERN ALAN ET AL: "Induction of volatile emissions from ripening apple fruits infested with cydia pomonella and the attraction of adult females", ENTOMOLOGIA EXPERIMENTALIS ET APPLICATA, KLUWER ACADEMIC PUBLISHERS, DORDRECHT, NL, vol. 102, no. 2, 1 January 2002 (2002-01-01), pages 145-151, XP002980205, ISSN: 0013-8703, DOI: 10.1023/A:1015814215460
- BENGTSSON ET AL.: J. AGRIC. FOOD CHEM., vol. 49, 2001, pages 3736-3741, XP002485397,
- IMAI T ET AL: "Field attraction of hoplia communis to 2-phenylethanol, a major volatile component from host flowers, Rosa spp", JOURNAL OF CHEMICAL ECOLOGY, PLENUM PUBLISHING CORPORATION, US, vol. 24, no. 9, 1 January 1998 (1998-01-01), pages 1491-1497, XP002980204, ISSN: 0098-0331, DOI: 10.1023/A:1020907732706
- DAVID A. J. TEULON ET AL: "4-Pyridyl Carbonyl and Related Compounds as Thrips Lures: Effectiveness for Onion Thrips and New Zealand Flower Thrips in Field Experiments", JOURNAL OF AGRICULTURAL AND FOOD CHEMISTRY, vol. 55, no. 15, 1 July 2007 (2007-07-01), pages 6198-6205, XP55052294, ISSN: 0021-8561, DOI: 10.1021/jf070389a
- G. K. Knudsen ET AL: "Plant volatiles for detection of migrating apple fruit moth.", IOBC/WPRS bulletin, 15 November 2009 (2009-11-15), pages 127-128, XP055052200, Proceedings of the Joint Conference "Semiochemicals without Borders" at Budapest (Hungary) 15 - 20 November, 2009 Retrieved from the Internet: URL:http://hdl.handle.net/10449/21340 [retrieved on 2013-02-04]

## Description

### The field of invention

The present invention relates to the monitoring of pest insects, attracting pest insects and rendering pest insects harmless in order to reduce or prevent infestation of crops. More particular, the present invention relates to the compositions, means and methods useful in monitoring, controlling and preventing infestation of fruit by moths belonging to the order Lepidoptera, such as e.g. *Argyresthia conjugella, Cydia pomonella, Hedya nubiferana and Pandemis heparana..*

### The background of the invention

For over 100 years, since its discovery as a pest insect in 1898 (Schøyen 1891-1912, Reuter 1899), the apple fruit moth *Argyresthia conjugella* (Zeller) (Lepidoptera: Argyresthiidae) has proven a formidable opponent for Fennoscandian growers to produce undamaged apples (Schøyen 1891-1912, Schøyen 1913-1939, Reuter 1899, Lampa 1908, Ahlberg 1927, Weber 1949, Edland 1979, Kobro 1988). Chemical control by a wide variety of pesticides has been the only remedy. Today, however the pesticide repertoire available for insect control in marginal crops, such as Fennoscandian apple production, is being reduced and public awareness of ecological issues are increasing. In recent decades, the field of chemical ecology has revealed environmentally friendly and effective ways to control pest insects (Ridgway et al. 1990 and Metcalf and Metcalf 1992). Mating disruption by the release of large quantities of species specific sex pheromones has proven to be effective against several lepidopteran pests (Witzgall et al. 2010). The method has, however, significant limitations and is especially vulnerable to the immigration of mated females from outside the treated area. For the majority of Lepidopteran species, pheromones affect male behaviour only, and do not target ovipositing females. The apple fruit moth mates in the forest. In addition seed production in rowan (*Sorbus aucuparia*) shows large-scale yearly fluctuations, named masting, a reproductive strategy in shrubs and trees to minimize seed loss (Silvertown 1980) and females attack apples only in years when a lack of berries on the preferred host rowan forces them to seek alternative host plants (Kobro et. al 2003). When attack occurs, large numbers of mated females disperse from forest habitats into apple orchards. The situation therefore qualifies for the application of host plant kairomones to trap mated females in years when attack is expected.

Kairomones are semiochemicals acting as behavior modifying volatile signals between individuals of different species. The kairomones are typically odoriferous volatile compound naturally released from plants and which are recognized by e.g. pest insects directing the insect pest to the suitable host plant. In contrast to the other type of semiochemicals, such as the pheromones, kairomones attracts both females and males.

Kairomones have therefore been suggested as attractants that may be useful in pest control. For example, WO 00/19820 disclose a mixture of phenylacetaldehyde, 2-phenylethanol, limonene, methyl-2-methoxybenzoate, and methyl salicylate for use as attractant for adult noctuids or other lepidopteran species.

WO 2006/040766 reports the use of geraniol, an oleofinic terpene alcohol found in many essential oils, as a volatile insect attractant useful in the combat codling moth (*Cydia pomonella*).

Apple fruit moth is particularly suitable for studying the odour space that encodes recognition and attraction to different plant hosts. Apple fruit moth is, despite its common name, a specialist seed predator of rowan *Sorbus aucuparia.* Apple fruit moth females lay eggs on apple *Malus domestica* only during rowan intermasting years, when rowan berries are not available. Apple is, however, less suitable for larval development (Ahlberg 1927; Kobro *et al.* 2003). Co-occurrence of volatile compounds in rowan and apple, which are both rosaceous plants, may account for fatal attraction of *A. conjugella* females to apple for oviposition.

A blend of 2-phenyl ethanol and anethole has been identified as an attractant for apple fruit moth, according to comparative chemical analysis and antennography of rowan and apple headspace. Traps baited with 2-phenyl ethanol and anethole capture a large number of females in the main crop rowan (Bengtsson et al. 2006, Entomologia Experimentalis et Applicata, 118, 77-85, WO2004/028256), but have failed to trap significant numbers of apple fruit moths in apple orchards during attack years. The further adding of other volatiles to a 1:1 blending of 2-phenyl ethanol and anethole, i.e. (Z)-3-hexenyl 2-methylbutanoate, decanal, methyl salicylate, or benzyl alcohol, did not show any effect on the trapping of apple fruit moth (Bengtsson et al. 2006, *supra*)

Recent discoveries regarding the insect host search mechanism explains the often low correlation between field and laboratory experiments (Bruce et al. 2005; Webster et al. 2010; Bruce and Pickett 2011) and possibly the influence of background odours on the attractive potential of field dispensers. Furthermore, although there have been reported synergic effects of2-phenhyl ethanol and anethole in respect of attracting apple fruit moth, others have not found any synergic effect of this two component blending in field studies (Knudsen et al., 2008, Physiological Entomology, 33, 1-6).

Today, there is increasing information of various plant volatiles present in a variety of plants and their role the interaction between plants and insects. Several compounds have been identified as volatile attractants released from host plants (Sutherland and Hutchins, 1972, Nature, 239, 170 (alfa-farnesene), Van et al, 1999, J. Chem. Ecol, 25, 1343 -1351, Bengtsson et al, 2001, J. Agric. Food Chem., 49, 3736-3741 (linalool and beta-caryophylene), Bruce and Pickett, 2011, Phytocemistry, 72 (13), 1605-1611. It is also been shown that combinations of volatile compounds may show increased attractant activity when present together compared with the activity when tested individually. For example, E,E-alfa-farnesene, (E)-beta.farnesen and ethyl-(E,Z)-2,4-decadienoate is shown to have increased attractant effect on moths when tested in a wind-tunnel compared with the effect shown when tested individually (Ansebo et al., 2004, J. Appl. Entomol, 128, 488-493).

However, there is still no clear picture as to which volatiles that are absolutely essential in attracting apple fruit moth to their host plants, and what volatiles that optionally may be redundant. This is particularly true when taking into account a field situation where the insects are exposed to high background noise. Previous studies have furthermore shown that what is shown to have attractant activity in laboratory tests such as wind tunnels do not correspond to what is seen in field studies (Knudsen et al, 2008, *supra*).

Due to the failing to trap significant numbers of apple fruit moths in apple orchards by the prior art blend compositions and systems, there is therefore still a need for efficient methods in the prevention of damage caused by apple fruit moths. From an environmental point of view, as well as an economical and consumer interest point of view, there is a need for environmentally friendly control of apple fruit moth. Efficient monitoring during attack years can pin-point the time when apple fruit moth females migrate into apple orchards and aid farmer decisions on when to apply conventional control measures, such as insecticide sprays. This will reduce the number of reapplications due to false timing. There is also a need for monitoring of apple fruit moth during attack years to assess the economic damage threshold for insecticide sprays. There is also a need for efficient control measures against the apple fruit moth, such as mass trapping of migrating females, without any use of pesticides. The mass trapping method is compatible with both conventional and organic production systems.

### Summary of invention

In order to overcome the limitation of the prior art as discussed above, it is thus an object of the present invention to provide a novel composition of volatile plant derived compounds that attracts fruit moths belonging to the order Lepidoptera in order to reduced damage to orchard crops.

The present invention therefore provides a composition comprising a mixture of specific volatiles which have shown to be superior in respect of attracting fruit moth belonging to the order Lepidoptera.

More particular, the present invention provides a composition for attracting or monitoring fruit moth belonging to the order Lepidoptera, wherein said composition comprises
a. 2-phenyl ethanol, methyl salicylate, decanal, cis-jasmone, (Z)-3-hexenyl-2-methyl butanoate, p-anisaldehyde, and anethole;
b. 2-phenyl ethanol, methyl salicylate, decanal, cis-jasmone, (Z)-3-hexenyl-2-methyl butanoate, p-anisaldehyde, and 3-methoxy benzyl alcohol;
c. 2-phenyl ethanol, methyl salicylate, decanal, cis-jasmone, (Z)-3-hexenyl-2-methyl butanoate, p-anisaldehyde, and 4-methoxy benzyl alcohol; or
d. 2-phenyl ethanol, methyl salicylate, decanal, cis-jasmone, (Z)-3-hexenyl-2-methyl butanoate, p-anisaldehyde, and m-anisaldehyde.

According to yet another embodiment, a composition is provided, comprising 2-phenyl ethanol, methyl salicylate, decanal, cis-jasmone, (Z)-3-hexenyl-2-methyl butanoate, p-anisaldehyde, and anethole.

According to yet another embodiment, a composition is provided,2-phenyl ethanol, methyl salicylate, decanal, cis-jasmone, (Z)-3-hexenyl-2-methyl butanoate, p-anisaldehyde, and 3-methoxy benzyl alcohol.

According to yet another embodiment, a composition is provided,2-phenyl ethanol, methyl salicylate, decanal, cis-jasmone, (Z)-3-hexenyl-2-methyl butanoate, p-anisaldehyde, and 4-methoxy benzyl alcohol.

According to yet another embodiment, a composition is provided,2-phenyl ethanol, methyl salicylate, decanal, cis-jasmone, (Z)-3-hexenyl-2-methyl butanoate, p-anisaldehyde, and m-anisaldehyde.

According to another aspect of the present invention, a composition is provided wherein the fruit moth is selected from the group *A. conjugella, Cydia pomonella, Hedya nubiferana, Pandemis heparana, A. curvella, A. pruniella, Lyonetia clerkella, Eupsilia transversa, and Yponomeuta malinellus, preferably* wherein the fruit moth is selected from the group *Argyresthia conjugella, Cydia pomonella, Hedya nubiferana and Pandemis heparana.*

According to another aspect of the present invention, the composition further comprises an insecticide.

According to another aspect of the present invention, the composition further comprises a pheromone.

According to another aspect of the present invention, the composition further comprises an additive, such as emulsifiers, antioxidants, thickeners, fillers and solvents.

The composition of the present invention is useful in monitoring the presence of fruit moth in the vicinity of fruit farms. The knowledge of the presence of and number of fruit moth during the growing season would enable the farmer to decide when to optionally apply insect control measures. The monitoring of and the better control of the development of the fruit moth will thus result in reduced use of insect repellents. The term repellent as used herein is to be understood to cover agents used to render fruit moth harmless by killing the fruit moth, i.e. such as insecticides and pesticides.

According to another aspect of the present invention, a method is provided comprising the steps of monitoring the presence of fruit moth belonging to the order Lepidoptera by providing a composition comprising a composition for attracting or monitoring fruit moth belonging to the order Lepidoptera according to the present invention.

According to one aspect of the present invention, a method is provided comprising the steps of monitoring the presence of fruit moth belonging to the order Lepidoptera by providing, in an insect trap, a composition comprising a composition for attracting or monitoring fruit moth belonging to the order Lepidoptera according to the present invention, wherein the fruit moth is selected from the group consisting of *A. cortjugella, Cydia pomonella, Hedya nubiferana, Pandemis heparana, A. curvella, A. pruniella, Lyonetia clerkella, Eupsilia transversa, and Yponomeuta malinellus,* preferably *Argyresthia conjugella, Cydia pomonella, Hedya nubiferana and Pandemis heparana,* preferably *Argyresthia conjugella, Cydia pomonella, Hedya nubiferana and Pandemis heparana.* According to one embodiment of the present invention, a method is provided further comprising the steps of collecting and counting the number of fruit moth present in the trap.

According to one embodiment, the present invention also relates to an insect trap device comprising the composition according to the invention. Said trap may be used to monitor the presence of fruit moth in order to decide whether and when it might be necessary to use insect repellent. The insect trap according to the present invention may also be used to entrap and render the fruit moth harmless in large scale thus totally avoiding the further use of insect repellents. The insect trap of the present invention is therefore particularly useful in mass trapping of fruit moth within organically grown farms where the use of insect repellents is not accepted. The insect trap of the present invention is also useful for mass trapping of fruit moth in private gardening.

According to yet another embodiment, the insect trap device comprises a composition is provided, comprising 2-phenyl ethanol, methyl salicylate, decanal, cis-jasmone, (Z)-3-hexenyl-2-methyl butanoate, p-anisaldehyde, and anethole.

According to yet another embodiment, the insect trap device comprises a composition is provided,2-phenyl ethanol, methyl salicylate, decanal, cis-jasmone, (Z)-3-hexenyl-2-methyl butanoate, p-anisaldehyde, and 3-methoxy benzyl alcohol.

According to yet another embodiment, the insect trap device comprises a composition is provided,2-phenyl ethanol, methyl salicylate, decanal, cis-jasmone, (Z)-3-hexenyl-2-methyl butanoate, p-anisaldehyde, and 4-methoxy benzyl alcohol.

According to yet another embodiment, the insect trap device comprises a composition is provided, 2-phenyl ethanol, methyl salicylate, decanal, cis-jasmone, (Z)-3-hexenyl-2-methyl butanoate, p-anisaldehyde, and m-anisaldehyde.

Finally, the present invention involves the use of the composition according to the present invention for monitoring, annihilation, mass trapping and control of fruit moth belonging to the order Lepidoptera.

According to another embodiment of this aspect, the present invention relates to the use of the composition according to the present invention in the reduction of insecticides/pest repellents required to control infestation of crops.

The present invention also relates to the use of a composition according to the present invention for mass trapping of fruit moth. According to yet another embodiment, the invention also relates to the use of said composition for reducing the use of insecticides required to control infestation of crops, such as apples, plums or cherries.

### Detailed description of the invention

Since approximately 2006, the present inventors have conducted several experiments aiming at finding a blend of host plant compounds which attract females in field conditions. Due to high berry production in rowan these tests have mostly been performed in rowan. In 2010 however, a large population of apple fruit moth combined with low berry production in rowan induced a large attack on apples in Norway. Based on results from previous trapping experiments a number of new blends were constructed and tested in both apple orchards and in the main host rowan.

The above research resulted in the surprising finding of a composition being superior in respect of attracting apple fruit moth when traps comprising the composition of the invention were placed in or nearby apple orchards. This is in contrast with prior art composition directed against monitoring and entrapping apple fruit moth, which was shown only capable of attracting moth if the trap was place in or nearby rowan trees.

The composition showing to be superior comprises the volatile compounds 2-phenyl ethanol, anethole, methyl salicylate, decanal, cis-jasmone, (Z)-3-hexenyl-2-methyl butanoate, p-anisaldehyde.

The structure of the compounds listed above is all commercially available. The structures are shown in scheme 1 below.

2-Phenyl ethanol (CAS 60-12-8) is found in a many different plants (Knudsen et al. 1996, 2006) and is a well known constituent of a variety of essential oils, including essential oils extracted from rose, carnation, hyacinth, orange blossom, geranium etc. It is as mentioned also known as a volatile compounds present in a variety of plants (Bruce and Pickett, 2011, *supra*) and have been suggested as a component being useful for attracting insects such as apple fruit moth to insect traps (Bengtsson et al., 2006, supra, Knudsen et al, 2008, *supra*).

Anethole (CAS 104-46-1) (also known as para-methoxyphenyl, p-proenylanisole and isoestragole) is an aromatic compound that is found inter alia in fennel and anis. It has been suggested to be present in rowan and having a synergistic activity in an attractant blending in combination with 2-phenyl ethanol (Bengtsson et al. 2006, *supra,* WO2004/028256). The present inventors have however not been able to determine anethole in rowan. The asserted synergistic effect of said two component blending has however not proven to be useful in field studies (Knudsen et al., 2008, supra).

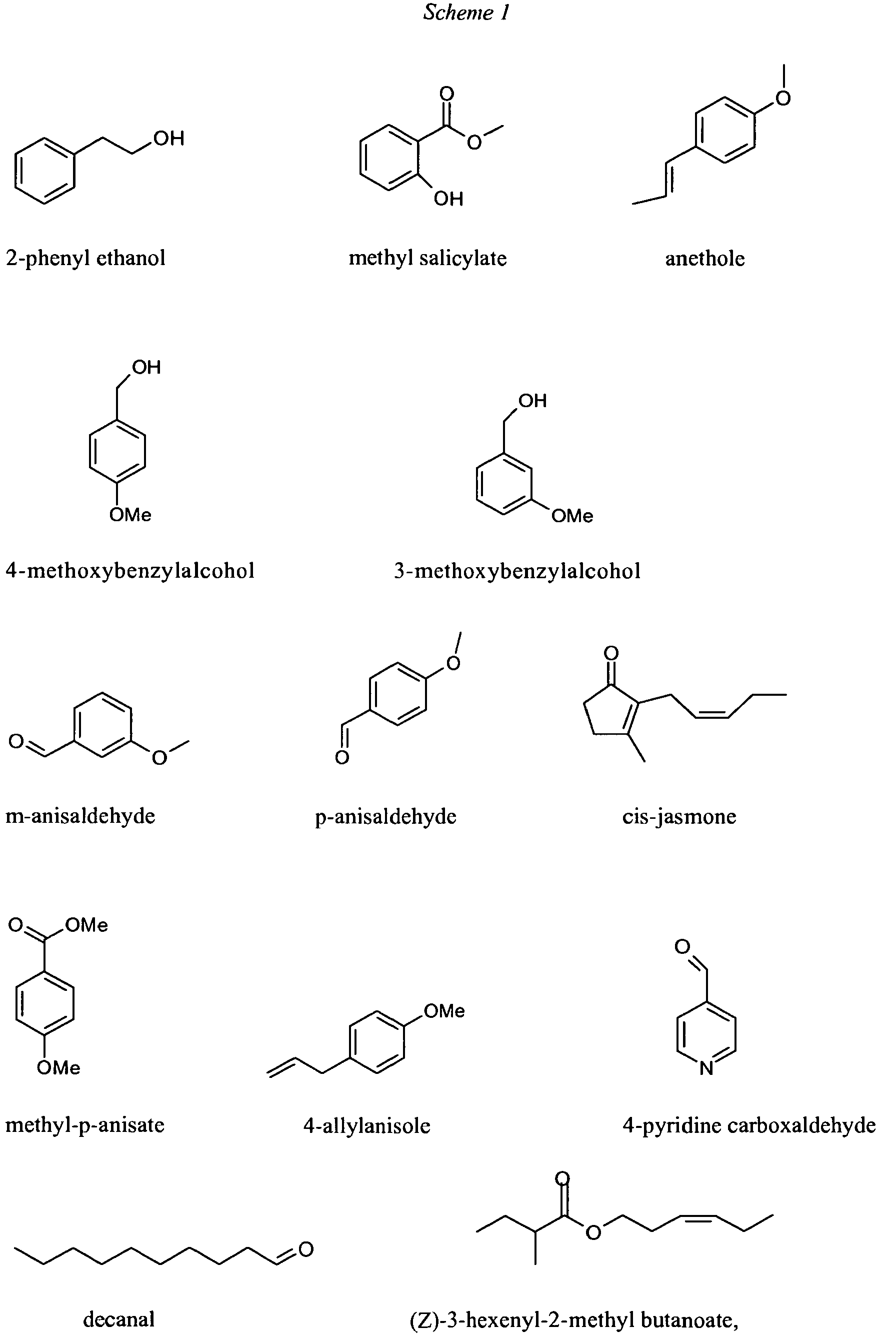

Methyl salicylate (CAS 119-36-8), also known as methyl-2-hydroxybenzoat, is also a natural product present in many plants, and known as a volatile compound having a function in attracting insect to host plants (Bruce and Pickett, 2011, *supra,* Knudsen et al. 2006, *supra,* Bengtsson et al., *supra,* WO2004/028256) as well as in defences against herbivorous insects (James and Price (2004), J. Chem.Ecol., 30(8), 1613-1628). It has also been seen that blends comprising methyl salicylate together with other compounds (benzaldehyde, benzyl alcohol, linalool, nerol, betamyrcene, geraniol, (E)-caryophyllene and alfa-farnesene) exert an attractant activity which exceeds the activity achieved with the components individually (Riffell et al, 2009, Curr.Biol., 19, 335-340, Riffel et al., 2009, Proc. Natl.Acad.Sci., 106, 19219-19226).

Decanal (CAS 112-31-2), also known as decyl aldehyde or caprinaldehyde, is also a volatile compound found to be present in plants. It has been identified as a volatile in Rowan, but the including of decanal in a blending of 2-phenyl ethanol and anethole did not have any additional effect on the attraction of apple fruit moth (Bengtsson et al., 2006, *supra,* Knudsen et al. 2006, *supra*,).

Cis-jasmone (CAS 488-10-8) is also a natural occurring organic compound, and as the name indicates and due to its odour, it is well known as a volatile compounds present in jasmine flowers. It has been found in small amounts in rowan berries (Bengtsson et al., 2006, *supra,* Knudsen et al. 2006, *supra*).

(Z)-3-hexenyl-2-methyl butanoate (CAS 53398-85-9) is also known to be present in various plants, such as in apples (Bengtsson et al, 2006, *supra*). It has been identified as a volatile in apple, but the including of (Z)-3-hexenyl-2-methyl butanoate in a blending of 2-phenyl ethanol and anethole did not have any additional effect on the attraction of apple fruit moth (Bengtsson et al., 2006, supra, Knudsen et al. 2006, *supra*).

p-anisaldehyde (Cas 123-11-5), also known as 4-methoxybenzaldehyd, is as clear from it name, present in anise. It has been found in small amounts in rowan berries (Bengtsson et al., 2006, *supra,* Knudsen et al. 2006, *supra*).

The present inventors have also identified other compounds that may be used in addition to or instead of anethole in the composition of the present invention, i.e. 4-methoxy benzyl alcohol (CAS 105-13-5), 3-methoxy benzyl alcohol (CAS 6971-51-3), and m-anisaldehyde (CAS 591-31-1), 4-allylanisole (CAS 140-67-0), methyl-p-anisat (CAS 121-98-2), and 4-pyridine carboxaldehyde (CAS 872-85-5). Surprisingly, the present inventors have determined the presence of 4-methoxy benzyl alcohol in rowan.

The composition of the present invention may also, in addition or instead of one or more of the compounds listed above, comprise structurally similar compounds having essentially the same structure and attractant characteristics as the listed compounds. The expression "structurally similar compounds having essentially the same structure and attractant characteristics thereof is meant to encompass compounds that compared with the listed compounds differs only by minor modifications of the structures in scheme 1, such as e.g. by introduction of substituents on the phenyl groups or alkyl and alkenyl chains etc. Within the said expression it is also to be understood that structurally similar compounds may be the structurally similar compounds which are commonly found in volatile collection from rowan, *Sorbus aucuparia or* apples/apple trees.

It is also to be understood that the composition of the present invention in addition to the above listed compounds may comprise in addition further compounds which are commonly found in the volatile collection of rowan, *Sorbus aucuparia, or* apple/apple trees.

In addition to the compounds listed above and/or structurally similar compounds having essentially the same structure and attractant characteristics thereof, the composition of the present invention may furthermore comprise other non-kairomone compounds useful in attracting apple fruit moth, such as e.g. pheromones. Pheromones means signal molecules typically produced by species belonging to the order Lepidoptera and which upon release by the female insect will attract males. The skilled person are well known with various pheromones being of relevance in respect of fruit moth, and which accordingly may be useful in combination with the composition of the present invention. An example of an apple fruit moth pheromones which may be useful in combination with the composition of the present invention is (Z)-11-hexadecenyl acetate (Z11:16Ac) (Jaastad et al., 2002). Other apple fruit moth pheromones are tetracyl acetate (14Ac), hexadecyl acetate (16Ac), and (Z)-11-hexadecenyl alcohol (Z11:16OH).

In addition, the composition of the present invention, and/or the insect trap device of the present invention, may optional comprise insecticides in order to destroy the apple fruit moth entering the insect trap device. The skilled person are well known with various pesticides that will be applicable in respect of killing apple fruit moths and which may therefore be useful to include in the composition of the present invention and/or to be contained in the insect trap device of the present invention. Thus, pesticides being active against fruit moth and which are accepted by the pesticide regulatory authorities may be included in the composition or insect trap device of the present invention. A non-limited list of insecticides useful for this purpose is pyrethroids, insect growth regulators and other contact acting pesticides affecting adult lepidoptera or their egg deposition. Furthermore, the composition of the present invention may optionally comprise additives useful in the formulation of a composition to be comprised in an insect trap device. A non-limited list of additives may e.g. be emulsifiers, antioxidants, thickeners, fillers and solvents. Also compounds enabling controlled release of the compounds of the present composition may be useful as additives to the present invention. The component of the present composition may be dissolved in any suitable carrier enabling the presentation of the components towards the relevant insects, i.e. enabling the attraction of fruit moth. Preferably, the carrier is a carrier being odour-free, i.e. do not interfere with the compounds of the compositions ability to attract fruit moth. Furthermore, it is also preferable that the compounds of the present invention are dissolved in a carrier ensuring sustained release of the compounds. Based on the teaching herein and his/her common general knowledge, the skilled person will be able to select a suitable carrier.

According to one preferred embodiment, the compounds of the present composition are dissolved in mineral oil, such as liquid paraffin, e.g. the mineral oil having the CAS number 8042-47-5.

According to another embodiment of the present invention, the compounds of the present composition are present in a non-polar solvent, such as hexane.

The composition of the present invention may be comprised in insect traps for monitoring, annihilation, mass trapping and overall control of the apple fruit moth population. Any insect trap useful for entrapment of apple fruit moth, such as delta traps with sticky bottoms, may be used. The insect trap should preferably be constructed so as to avoid deterioration of the composition according to the present invention due to UV radiation. The insect trap device of the present invention is furthermore preferably constructed to avoid that any sticky materials used in the trap device comes in contact with water upon rainy weather or during watering of the orchards. Examples of traps that may be useful in this respect is the Tetra Trap provided by PheroNet AB, Lund, Sweden, Isotrap (Model IT400) from CBC Europe Ltd., Milan, Italy or Pherocon VI Delat trap or II B available from Trécé Inc., Adair, USA.

The insect trap device of the present invention may be placed directly in the orchard or in the adjacent vegetation.

Although the composition of the present invention is in particularly useful in respect of entrapping and monitoring apple fruit moth and thereby avoiding damaged apples, it cannot be excluded that said composition also may be useful in respect of monitoring and/or entrapping moth that may cause infestation of crops of other plants, such pears, plums or cherries.

The term "fruit moth belonging to the order Lepidoptera" is thus meant to include fruit moth which may damage various fruits. It is e.g. to be understood that said expression includes both frugivorous moth and folivorous moth. A non-limiting list of "fruit moth belonging to the order lepidoptera" that may be monitored or mass trapped by the use of the composition of the present invention is e.g. *A. conjugella, Cydia pomonella, Hedya nubiferana, Pandemis heparana, A. curvella, A. pruniella, Lyonelia clerkella, Eupsilia transversa,* and *Yponomeuta malinellus.*

All field experiments prior to 2010 have been conducted using red rubber septa loaded with hexane diluted compounds. This method has been extensively used in field trapping experiments due to its simplicity and low cost. Attraction of insects to ubiquitous volatile host plant cues is however based on recognition of blend ratios (Bruce et al. 2005) and the rubber may not be adequate for long life release of these ratios. In 2010-2012 all blends were tested using narrow distillation oil as solvent and compared to rubber septa. In 2011 and 2012 an additional dispenser of the same type used for mating disruption (Shin-Etsu, Japan) was used.

### Legends

Table 1. Treatments used in field trapping tests in apple orchard and rowan trees during the 2010. Compounds with asterisk were diluted in ethanol. L1-L6 was hexane dilutions loaded on red rubber septa. L7-L12 was mineral oil dilutions loaded on cotton wicks in eppendorf vials. Total load of compounds in each treatment was 9 mg.
Table 2. Treatments used in field trapping tests in apple orchard and rowan trees during the 2011. Compounds with asterisk were diluted in ethanol. Total load of compounds in each mineral oil treatment was 9 mg. Total load of compounds in K1 and K2 was 17 mg.
Table 3. Treatments used in dose response trapping tests in apple orchard and rowan trees during the 2011. Compounds with asterisk were diluted in ethanol.
Table 4. Treatments used in field trapping tests in rowan trees during the 2012. Compounds with asterisk were diluted in ethanol. Total load of compounds in each mineral oil treatment was 9 mg.
Figure 1. Female and male apple fruit moth trap captures in an apple orchard during 2010. Different letters indicate significant differences (Tukey-Kramer).
Figure 2. Total apple fruit moth trap captures in rowan during 2010.
Figure 3. Total apple fruit moth trap captures in apple during 2011
Figure 4: Total apple fruit moth trap captures in rowan during 2011.
Figure 5: Apple fruit moth trap dose response
Figure 6. Total apple fruit moth trap captures in rowan during 2012.

### Experiments

### 1. Field trapping tests 2010

Compounds (table 1) were dissolved to 100 µg µl⁻¹ in a 1:1 mixture in n-hexane (GC grade ≥ 99.0 %, Fluka Analytical) or in mineral oil (CAS 8042-47-5, Sigma Aldrich) to be formulated on red rubber septa (VWR International, Stockholm, Sweden) or onto 1 cm long pieces of cotton wicks (Size 5, Parotisroll, Roeko) inserted into 1.5 ml microcetrifuge tubes (TreffAG, Switzerland), respectively. 2-phenyl ethanol and p-anisaldehyde was prepared in pure ethanol as these compound dissolve poorly in hexane and oil. Total load of compounds were kept at 9 mg for all treatments and 90 µl of mineral oil was used in all eppendorf vials. Tetra traps (PheroNet AB, Lund) were arranged with one replicate (L1-L12) in the apple orchard and one replicate in the nearby border. Traps were hung at ca 2 m height on green branches. The apple-rowan pairs were replicated in 5 locations in Lofthus (Ullensvang, Norway). Distance between traps was approximately 8 meters. Traps were checked 7 times from the beginning of the tests at June 22 until termination of the trials at August 6. In 2010 apple fruit moth attacked apple crops in Ullensvang (VIPS, S. Kobro pers. comm.).

### 2. Field trapping tests 2011

Based on the results from 2010 a new trapping series were tested in both apple orchards and in rowan in 2011 (table 2). Compounds were dissolved in mineral oil (see above) and a new type of dispenser was also tested (K1 and K2, Shin-Etsu Chemical co., Ltd, Japan). Total load in oil dispensers were kept at 9 mg. Total load of K1 and K2 dispensers were 17 mg. A dose response test with oil dispensers (Total load; 4.5 mg, 9 mg and 18 mg) in Tetra traps (PheroNet AB, Lund) and Isotrap (Model IT400, CBC Europe Ltd, Milan, Italy) and K1 dispensers (17 mg and 34 mg) in CBC traps was performed in rowan (table 3). 2011 was a masting year and no apple fruit moth attack took place in Ullensvang (VIPS, S. Kobro pers. comm.).

### 3. Field trapping tests 2012

Anethole has been identified from rowan volatile collections (Bengtsson et al. 2006). In later collections from rowan, however, it has not been found and this raises questions about the apple fruit moth attraction to anethole. Anethole has shown to synergize attraction to 2-phenyl ethanol and the present inventors suspected that anethole was perceived as an analogous compound for the apple fruit moth. After checking for similar compounds in headspace collections from rowan, 4-methoxy benzyl alcohol was identified as abundant in some samples. In 2012 a series of field tests were performed where anethole was replaced by the identified compound from rowan and some of their positional isomers (Table 4). 2-Phenyl ethanol, p-anisaldehyde, 4-methoxy benzyl alcohol, 3-methoxy benzyl alcohol, methyl-p-anisate, m-anisaldehyde and 4-pyridin-carboxaldehyde were diluted in pure ethanol. Total load of compounds were kept at 9 mg for all treatments and 90 µl of mineral oil was used in all eppendorf vials.

### 4. Results

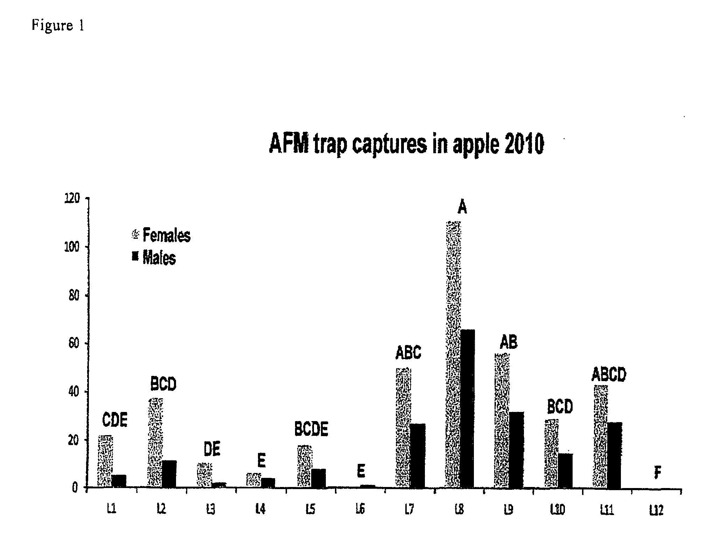

In the apple orchard in 2010 significantly more females than males were caught (F=18.44, df=179, p<0.0001). There were also significant differences between treatments (F=9.37, df=179, p<0.0001). The seven component mix L8 caught significantly more apple fruit moth females and males (Figure 1) than the previously published two-component mix (Bengtsson et al. 2006) (Tukey-Kramer; t=4.14, df=179, p=0.0032, adjusted for multiple comparisons). No significant differences were found between L8, L9, L7 and L11, but L8 was significantly better than all other treatments when not adjusting for multiple comparisons. There were no significant interaction between sex and treatments, and the interaction term was deleted from the model.

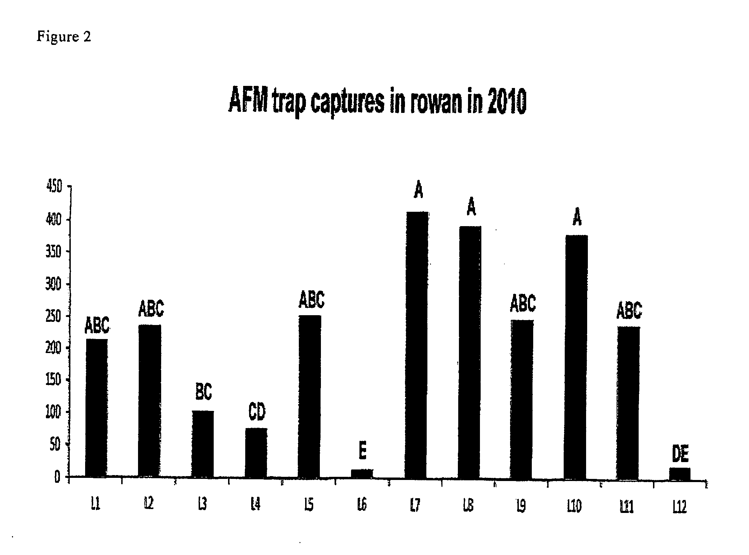

In rowan in 2010 there were significant difference in trap captures between treatments (F=13.22, df=11, p<0.0001). Several blends were equally attractive and no significant difference were found between the previously published two-component mix and the seven component mix L8 (Figure 2).

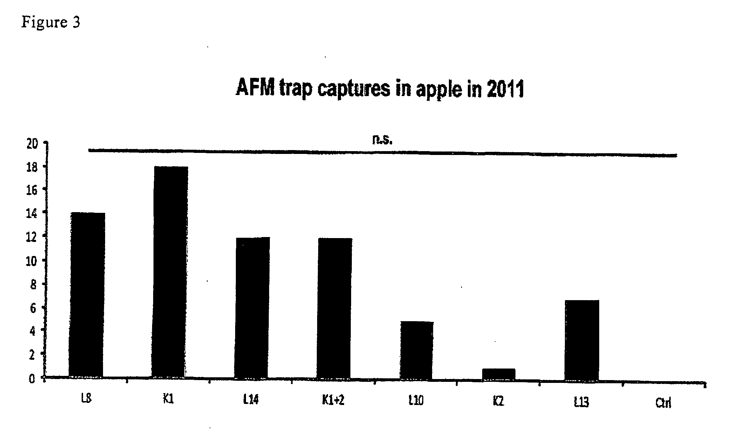

The intermast year of 2010 reduced the apple fruit moth population in 2011 and no damage by apple fruit moth in apple crops was expected. There were no significant difference in trap captures in apple orchards on the different treatments (F=1.84, df=7, p=0.1253, Figure 3).

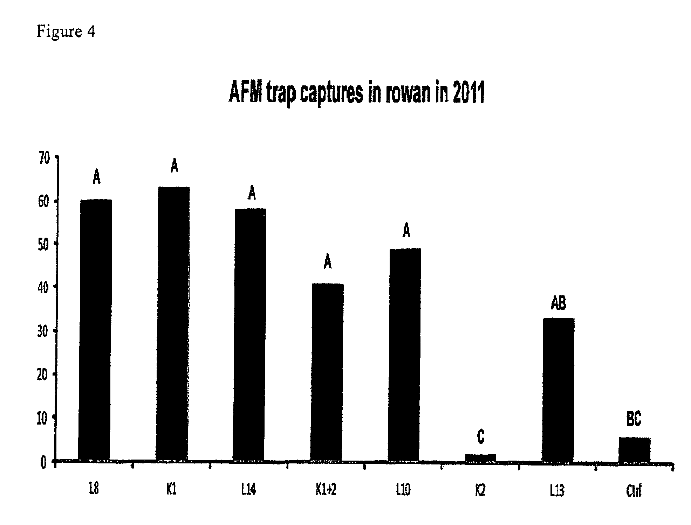

In rowan in 2011 there were significant differences between the different treatments (F=5.64, df=7, p=0.0006). There were no significant difference between the previously published two-component blend L10 and the seven-component mix L8 (Figure 4).

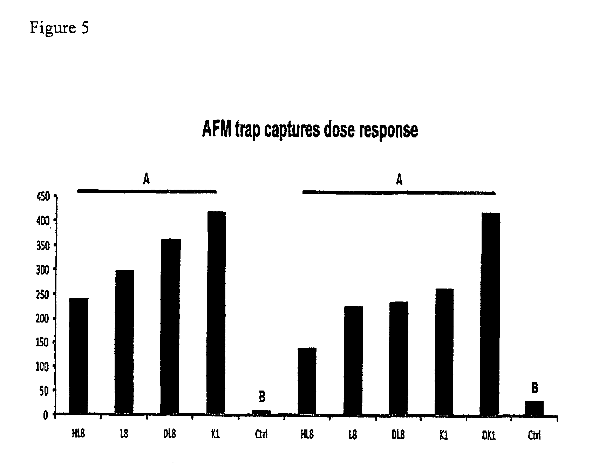

In the dose response test, a significant difference between treatments and control was found (F=11.55, df=10, p<0.001). No significant difference between the doses was found, but a clear trend in both trap types suggests that higher doses increase trap captures (Figure 5).

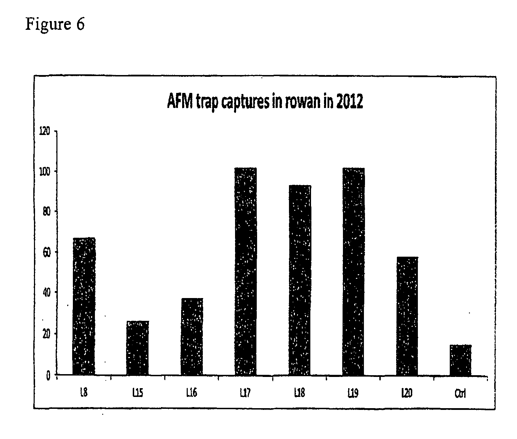

In rowan in 2012 there were a significant difference between treatments (F=21.03, df=7, p<0.001). Five compound substitutions of anethole showed equal attractiveness to the previously described seven component blend L8. These were 4-methoxy-benzyl alcohol (L 17), 3-methoxy-benzyl alcohol (L18), m-anisaldehyde (L19), 4-pyridin carboxaldehyde (L20) and methyl-p-anisate (L16). Out of these five blends L17, L18 and L19 showed the best attraction (Figure 6).

### Conclusion.

The attractive potential of the previously published two-component blend is context dependent only attracting significant number of apple fruit moths when traps are placed in the main host plant rowan. The seven-component blend L8, however, maintains its attractive potential also when employed in the apple orchard during attack years. The higher compound complexity in the seven-component blend may therefore better cope with the different volatile backgrounds or even be synergized by the apple odours. Anethole may be replaced by other compounds as shown in the 2012 field tests.

### Reference list

AHLBERG, O. 1927. Rönnbärsmalen, Argyresthia conjugella Zell. En redogörelse för undersökningar åren 1921-1926 (in Swedish with English summary). - Meddel. Nr. 324 från Centralanstalten för försöksväsendet på jordbruksområdet, Lantbruksentomologiska avdelningen, Stockholm.
ANSEBO, L., CORACINI, D. A. BENGTSSON, M., LIBLIKAS, I., RAMIREZ, M. I., BORG-KARLSON, A-K., TASIN, M. AND WITZGALL, P. 2004. Antennal and behavioural response of codling moth Cydia pomonella to plant volatiles. JEN. 128:488-493.
BENGTSSON, M., BÃCKMAN, A-C., LIBLIKAS, I., RAMIREZ, M. I., BORG-KARLSON, A-K., ANSEBO, L., ANDERSON, P., LÕFQUIST, J. AND WITZGALL, P. 2001. Plant odour analysis of apple: Antennal response of codling moth females to apple volatiles during phenological development. J. Agric. Food Chem. 49:3736-3741.
BENGTSSON, M., JAASTAD, G., KNUDSEN, G., KOBRO, S., BÃCKMAN, A-C., PETTERSSON, E. AND WITZGALL, P. 2006. Plant volatiles mediate attraction to host and non-host plant in apple fruit moth, Argyresthia conjugella. Entomol. Exp. Appl, 118:77-85.
BRUCE, T.J.A., WADHAMS, L.J. AND WOODCOCK, C.M. 2005. Insect host location: a volatile situation. Trend. Plant Sci. 10:269-274.
BRUCE, T.J.A., AND PICKETT, J.A. 2011. Perception of plant volatile blends by herbivorous insects - finding the right mix. Phytochemistry. 72(13):1605-1611.
EDLAND, T. 1979. Prognosegranskingar for rognebærmøll. (In Norwegian). Sluttrapport nr. 304. Norges Landbruksvitenskapelige Forskningsråd.
RIFFELL et al, 2009, Curr. Biol., 19, 335-340,
RIFFEL et al., 2009, Proc. Natl. Acad. Sci., 106, 19219-19226
KNUDSEN, G. BENGTSSON, M., KOBRO, S., JAASTAD, G,. HOFSVANG, T. AND WITZGALL, P. 2008. Discrepancy in laboratory and field attraction of apple fruit moth Argyresthia conjugella to host plant volatiles. 33:1-6.
KNUDSEN, J.T., TOLLSTEN, L. AND BERGSTRÖM, G.L. 1993. Floral scents - a checklist of volatile compounds isolated by head-space techniques. Phytochemistry. 33:253-280.
KNUDSEN, J.T., ERIKSSON, R., GERSHENZON, J. AND STÅHL, B. 2006. Diversity and distribution of floral scent. Bot. Rev. 72:1-120.
KOBRO, S. 1988. Temperaturavhengighet hos rognebærmøll. (In Norwegian) Växtskyddsrapporter, Jordbruk, 53, 115-121.
KOBRO, S., SØREIDE, L., DJØNNE, E., RAFOSS, T., JAASTAD, G. AND WITZGALL, P. 2003. Masting of rowan Sorbus aucuparia L. and consequences for the apple fruit moth, Argyresthia conjugella Zeller. Pop. Ecol. 45:25-30.
LAMPA, S. 1908. Rönnbärsmalen (Argyresthia conjugella Zell.) och vad vi veta därom. (In Swedish). Entomol. Tidskr. 254-272.
METCALF, R.L. AND METCALF, E.R. 1992. Plant kairomones in insect ecology and control. Contemporary topics in entomology; 1. Chapman and Hall, New York.
REUTER, E. 1899. En ny konkurrent till äppelvecklaren. (In Swedish). Entomol. Tidskr. 71-76.
RIDGWAY, R.L., SILVERSTEIN, R.M. AND INSCOE, M.N. (Eds). 1990. Behavior-modifying chemicals for insect management: Applications of pheromones and other attractants. Marcel Dekker Inc., New York.
SCHØYEN, W.M. 1891-1912. Beretning om Skadeinsekter og Plantesygdomme. (In Norwegian). Grøndahl & Søns bogtrykkeri, Kristiania.
SCHØYEN, T.H. 1913-1939. Beretning om Skadeinsekter og Plantesygdomme. (In Norwegian). Grøndahl & Søns bogtrykkeri, Kristiania.
SILVERTOWN, J.W. 1980 The evolutionary ecology of mast seeding in trees. Biol. J. Linn. Soc. 14:235-250.
SUTHERLAND AND HUTCHINS, 1972, Nature, 239, 170
WEBER, A. 1949. Plantepatologiske tanker efter frugtplukningen. (In Danish). Ervervsfrugtavleren. Offprint. 4pp.
WEBSTER, B., BRUCE, T., PICKETT, J. AND HARDIE, J. 2010. Volatiles functioning as host cues in a blend become nonhost cues when presented alone to the black bean aphid. Anim. Behav. 79:451-457.
WITZGALL, P., KIRSCH, P. AND CORK, A. 2010. Sex pheromones and their impact on pest management. J. Chem. Ecol. 36:80-100.
YAN, F, BENGTSSON, M. AND WITZGALL, P. 1999. Behavioral response of female codling moths, Cydia pomonella, to apple volatiles. J. Chem. Ecol. 25:1343-1351.

**Table 1**

| | | | L1 | L2 | L3 | L4 | L5 | L6 | L7 | L8 | L9 | L1 0 | L11 | L12 |
|---|---|---|---|---|---|---|---|---|---|---|---|---|---|---|
| | | solvent | Hexane | | | | | | Mineral oil | | | | | |
| Compound | Supplier | cas # | | | | | | | | | | | | |
| 2 phenyl ethanol* | Sigma Aldrich | 60-12-8 | 1,5 | 1,3 | 4,5 | 4, 5 | 1,5 | - | 1,5 | 1,3 | 4,5 | 4,5 | 1,5 | - |
| Anethole | Alfa Aesar | 104-46-1 | 1,5 | 1,3 | - | 4, 5 | - | - | 1,5 | 1,3 | - | 4,5 | - | - |
| Methyl salicylate | Fluka | 119-36-8 | 1,5 | 1,3 | - | - | 1,5 | - | 1,5 | 1,3 | - | - | 1,5 | - |
| Decanal | Sigma Aldrich | 112-31-2 | 1,5 | 1,3 | - | - | - | - | 1,5 | 1,3 | - | - | - | - |
| cis-jasmone | Bedoukian | 488-10-8 | 1,5 | 1,3 | - | - | - | - | 1,5 | 1,3 | - | - | - | - |
| (2)-3-hexenyl-2-methylbutanoate | SAFC | 53398-85-9 | 1,5 | 1,3 | - | - | - | - | 1,5 | 1,3 | - | - | - | - |
| p-anisaldehyde* | Fluka | 123-11-5 | - | 1,3 | 4,5 | - | 1,5 | - | - | 1,3 | 4,5 | - | 1,5 | - |
| Benzyl alcohol | Fluka | 100-51-6 | - | - | - | - | 1,5 | - | - | - | - | - | 1,5 | - |
| Phenylacetaldehyde | Sigma Aldrich | 122-78-1 | - | - | - | - | 1,5 | - | - | - - | - - | - | 1,5 | - |
| 6-methyl-5-hepten-2-one | Sigma Aldrich | 110-93-0 | - | - | - | - | 1,5 | - | - | - | - | - | 1,5 | - |

**Table 2**

| | | | L8 | K1 | L14 | K1+2 | K2 | L13 | Ctrl |
|---|---|---|---|---|---|---|---|---|---|
| Compound | Supplier | cas # | | | | | | | |
| 2 phenyl ethanol* | Sigma Aldrich | 60-12-8 | 1,3 | 2,4 | 0,9 | 2,4 | - | 1,5 | - |
| Anethole | Alfa Aesar | 104-46-1 | 1,3 | 2,4 | 0,9 | 2,4 | - | - | - |
| Methyl salicylate | Fluka | 119-36-8 | 1,3 | 2,4 | 0,9 | 2,4 | - | 1,5 | - |
| Decanal | Sigma Aldrich | 112-31-2 | 1,3 | 2,4 | 0,9 | 2,4 | - | 1,5 | - |
| cis-jasmone | Bedoukian | 488-10-8 | 1,3 | 2,4 | 0,9 | 2,4 | - | 1,5 | - |
| (2)-3-hexenyl-2-methylbutanoate | SAFC | 53398-85-9 | 1,3 | 2,4 | 0,9 | 2,4 | - | 1,5 | - |
| p-anisaldehyde* | Fluka | 123-11-5 | 1,3 | 2,4 | 0,9 | 2,4 | - | 1,5 | - |
| Benzyl alcohol | Fluka | 100-51-6 | - | - | 0,9 | 5,7 | 5,7 | - | - |
| Phenylacetaldehyde | Sigma Aldrich | 122-78-1 | - | - | 0,9 | 5,7 | 5,7 | - | - |
| 6-methyl-5-hepten-2-one | Sigma Aldrich | 110-93-0 | - | - | 0,9 | 5,7 | 5,7 | - | - |

**Table 3**

| | | | HL8 | L8 | DL8 | K1 | Ctrl | HL8 | L8 | DL8 | K1 | DK1 | Ctrl |
|---|---|---|---|---|---|---|---|---|---|---|---|---|---|
| | | Trap | PheroNet | | | | | Isotrap | | | | | |
| Compound | Supplier | cas # | | | | | | | | | | | |
| 2 phenyl ethanol* | Sigma Aldrich | 60-12-8 | 0,6 | 1,3 | 2,6 | 2,4 | - | 0,6 | 1,3 | 2,6 | 2,4 | 4,8 | - |
| Anethole | Alfa Aesar | 104-46-1 | 0,6 | 1,3 | 2,6 | 2,4 | - | 0,6 | 1,3 | 2,6 | 2,4 | 4,8 | - |
| Methyl salicylate | Fluka | 119-36-8 | 0,6 | 1,3 | 2,6 | 2,4 | - | 0,6 | 1,3 | 2,6 | 2,4 | 4,8 | - |
| Decanal | Sigma Aldrich | 112-31-2 | 0,6 | 1,3 | 2,6 | 2,4 | - | 0,6 | 1,3 | 2,6 | 2,4 | 4,8 | - |
| cis-jasmone | Bedoukian | 488-10-8 | 0,6 | 1,3 | 2,6 | 2,4 | - | 0,6 | 1,3 | 2,6 | 2,4 | 4,8 | - |
| (2)-3-hexenyl-2-methylbutanoate | SAFC | 53398-85-9 | 0,6 | 1,3 | 2,6 | 2,4 | - | 0,6 | 1,3 | 2,6 | 2,4 | 4,8 | - |
| p-anisaldehyde* | Fluka | 123-11-5 | 0,6 | 1,3 | 2,6 | 2,4 | - | 0,6 | 1,3 | 2,6 | 2,4 | 4,8 | - |

**Table 4**

| **Compound** | **Supplier** | **CAS #** | **L8** | **L15** | **L16** | **L17** | **L18** | **L19** | **L20** | **Ctrl** |
|---|---|---|---|---|---|---|---|---|---|---|
| 2-phenylethanol * | Sigma Aldrich | 60-12-8 | 1,3 | 1,3 | 1,3 | 1,3 | 1,3 | 1,3 | 1,3 | - |
| anethole | Alfa Aesar | 104-46-1 | 1,3 | - | - | - | - | - | - | - |
| methyl salicylate | Fluka | 119-36-8 | 1,3 | 1,3 | 1,3 | 1,3 | 1,3 | 1,3 | 1,3 | - |
| decanal | Sigma Aldrich | 112-31-2 | 1,3 | 1,3 | 1,3 | 1,3 | 1,3 | 1,3 | 1,3 | - |
| cis-jasmone | Bedoukian | 488-10-8 | 1,3 | 1,3 | 1,3 | 1,3 | 1,3 | 1,3 | 1,3 | - |
| (Z)-3-hexenyl-2-methyl butanoate | SAFC | 53398-85-9 | 1,3 | 1,3 | 1,3 | 1,3 | 1,3 | 1,3 | 1,3 | - |
| p-anisaldehyde * | Fluka | 123-11-5 | 1,3 | 1,3 | 1,3 | 1,3 | 1,3 | 1,3 | 1,3 | - |
| 4-allylanisole | Sigma Aldrich | 140-67-0 | - | 1,3 | - | - | - | - | - | - |
| methyl-p-anisate * | Sigma Aldrich | 121-98-2 | - | - | 1,3 | - | - | - | - | - |
| 4-methoxy-benzylalcohol * | Sigma Aldrich | 105-13-5 | - | - | - | 1,3 | - | - | - | - |
| 3-methoxy-benzylalcohol * | Sigma Aldrich | 6971-51-3 | - | - | - | - | 1,3 | - | - | - |
| m-anisaldehyde * | Sigma Aldrich | 591-31-1 | - | - | - | - | - | 1,3 | - | - |
| 4-pyridin carboxaldehyde * | Sigma Aldrich | 872-85-5 | - | - | - | - | - | - | 1,3 | - |

## Claims

1. A composition for attracting or monitoring fruit moth belonging to the order Lepidoptera, wherein said composition comprises:
a. 2-phenyl ethanol, methyl salicylate, decanal, cis-jasmone, (Z)-3-hexenyl-2-methyl butanoate, p-anisaldehyde, and anethole;
b. 2-phenyl ethanol, methyl salicylate, decanal, cis-jasmone, (Z)-3-hexenyl-2-methyl butanoate, p-anisaldehyde, and 3-methoxy benzyl alcohol;
c. 2-phenyl ethanol, methyl salicylate, decanal, cis-jasmone, (Z)-3-hexenyl-2-methyl butanoate, p-anisaldehyde, and 4-methoxy benzyl alcohol; or
d. 2-phenyl ethanol, methyl salicylate, decanal, cis-jasmone, (Z)-3-hexenyl-2-methyl butanoate, p-anisaldehyde, and m-anisaldehyde.

2. A composition according to claim 1, wherein the fruit moth is selected from the group *A. conjugella, Cydia pomonella, Hedya nubiferana, Pandemis heparana, A. curwella, A, pruniella, Lyonetia clerkella, Eupsilia transversa, and Yponomeuta malinellus*

3. A composition according to claim 2, wherein the fruit moth is selected from the group *Argyresthia conjugella, Cydia pomonella, Hedya nubiferana and Pandemis heparana.*

4. A composition according to any of the preceding claims, wherein said composition further comprises an insecticide.

5. A composition according to any of the preceding claims, wherein said composition further comprises a pheromone.

6. A composition according to any of the preceding claims, wherein said composition further comprises one or more additive.

7. A composition according to claim 6, wherein the additive is selected from the group consisting of emulsifiers, antioxidants, thickeners, fillers and solvents

8. An insect trap device comprising the composition according to any of the claim 1-7.

9. A method for monitoring, annihilation, mass trapping and control of fruit moth belonging to the order Lepidopter characterised comprising the steps of providing a composition according to any of the claims 1-7 in an insect trap device.

10. A method according to claim 9, wherein the fruit moth is selected from the group consisting of *A. conjugella, Cydia pomonella, Hedya nubiferana, Pandemis heparana, A. curvella, A. pruniella, Lyonetia clerkella, Eupsilia transversa, and Yponomeuta malinellus.*

11. A method according to claim 10, wherein the fruit moth is selected from the group consisting of *Argyresthia conjugella, Cydia pomonella, Hedya nubiferana and Pandemis heparana,* preferably *Argyresthia conjugella Cydia pomonella, Hedya nubiferana and Pandemis heparana.*

12. A method according to any of the claims 9-11, wherein the method further comprises the steps of collecting and counting the number of fruit moth present in the trap.

13. Use of the composition according to any of the claims 1-7 for monitoring, annihilation, mass trapping and control of fruit moth belonging to the order Lepidopter.

14. Use of the composition according to any of the claims 1-7 for reducing the use of insecticides required to control infestation of crops.

15. Use according to claim 14, wherein the crops are apples.

## Patentansprüche

1. Zusammensetzung zum Anlocken oder Überwachen von Wicklern, die zur Ordnung Lepidoptera gehören, wobei die Zusammensetzung Folgendes aufweist:
a. 2-Phenylethanol, Methylsalicylat, Decanal, cis-Jasmon, (Z)-3-Hexenyl-2-methylbutanoat, p-Anisaldehyd und Anethol;
b. 2-Phenylethanol, Methylsalicylat, Decanal, cis-Jasmon, (Z)-3-Hexenyl-2-methylbutanoat, p-Anisaldehyd und 3-Methoxybenzylalkohol;
c. 2-Phenylethanol, Methylsalicylat, Decanal, cis-Jasmon, (Z)-3-Hexenyl-2-methylbutanoat, p-Anisaldehyd und 4-Methoxybenzylalkohol; oder
d. 2-Phenylethanol, Methylsalicylat, Decanal, cis-Jasmon, (Z)-3-Hexenyl-2-methylbutanoat, p-Anisaldehyd und m-Anisaldehyd.

2. Zusammensetzung nach Anspruch 1,
wobei der Wickler aus der Gruppe von A. conjugella, Cydia pomonella, Hedya nubiferana, Pandemis heparana, A. curvella, A. pruniella, Lyonetia clerkella, Eupsilia transversa und Yponomeuta malinellus ausgewählt ist.

3. Zusammensetzung nach Anspruch 2,
wobei der Wickler aus der Gruppe von Argyresthia conjugella, Cydia pomonella, Hedya nubiferana und Pandemis heparana ausgewählt ist.

4. Zusammensetzung nach einem der vorstehenden Ansprüche,
wobei die Zusammensetzung ferner ein Insektizid aufweist.

5. Zusammensetzung nach einem der vorstehenden Ansprüche,
wobei die Zusammensetzung ferner ein Pheromon aufweist.

6. Zusammensetzung nach einem der vorstehenden Ansprüche,
wobei die Zusammensetzung ferner einen oder mehrere Zusätze aufweist.

7. Zusammensetzung nach Anspruch 6,
wobei der Zusatz aus der Gruppe ausgewählt ist, die Emulgatoren, Antioxidantien, Verdickungsmitteln, Füllstoffen und Lösungsmitteln besteht.

8. Vorrichtung in Form einer Insektenfalle,
die die Zusammensetzung nach einem der Ansprüche 1 bis 7 aufweist.

9. Verfahren zum Überwachen, Vernichten, massenweisen Einfangen und Kontrollieren von Wicklern, die zur Ordnung Lepidoptera gehören,
**dadurch gekennzeichnet, dass** es den Schritt des Bereitstellens einer Zusammensetzung nach einem der Ansprüche 1 bis 7 in einer Vorrichtung in Form einer Insektenfalle aufweist.

10. Verfahren nach Anspruch 9,
wobei der Wickler aus der Gruppe ausgewählt ist, die aus A. conjugella, Cydia pomonella, Hedya nubiferana, Pandemis heparana, A. curvella, A. pruniella, Lyonetia clerkella, Eupsilia transversa und Yponomeuta malinellus besteht.

11. Verfahren nach Anspruch 10,
wobei der Wickler aus der Gruppe von Argyresthia conjugella, Cydia pomonella, Hedya nubiferana und Pandemis heparana, vorzugsweise Argyresthia conjugella, Cydia pomonella, Hedya nubiferana und Pandemis heparana ausgewählt ist.

12. Verfahren nach einem der Ansprüche 9 bis 11,
wobei das Verfahren ferner die Schritte des Sammelns und Zählens der Anzahl der in der Falle vorhandenen Wickler aufweist.

13. Verwendung der Zusammensetzung nach einem der Ansprüche 1 bis 7 zum Überwachen, Vernichten, massenweisen Einfangen und Kontrollieren von Wicklern, die zur Ordnung Lepidoptera gehören.

14. Verwendung der Zusammensetzung nach einem der Ansprüche 1 bis 7 zur Verringerung der Verwendung von Insektiziden, die für die Kontrolle des Befalls von Früchten erforderlich sind.

15. Verwendung nach Anspruch 14,
wobei die Früchte Äpfel sind.

## Revendications

1. Composition pour attirer ou surveiller une tordeuse appartenant à l'ordre des lépidoptères, dans laquelle ladite composition comprend :
a. du 2-phényl éthanol, du salicylate de méthyle, du décanal, de la cis-jasmone, du butanoate de (Z)-3-hexényl-2-méthyle, du p-anisaldéhyde et de l'anéthol ;
b. du 2-phényl éthanol, du salicylate de méthyle, du décanal, de la cis-jasmone, du butanoate de (Z)-3-hexényl-2-méthyle, du p-anisaldéhyde et de l'alcool 3-méthoxy benzylique ;
c. du 2-phényl éthanol, du salicylate de méthyle, du décanal, de la cis-jasmone, du butanoate de (Z)-3-hexényl-2-méthyle, du p-anisaldéhyde et de l'alcool 4-méthoxy benzylique ; ou
d. du 2-phényl éthanol, du salicylate de méthyle, du décanal, de la cis-jasmone, du butanoate de (Z)-3-hexényl-2-méthyle, du p-anisaldéhyde et du m-anisaldéhyde.

2. Composition selon la revendication 1, dans laquelle la tordeuse est choisie dans le groupe *A. conjugella, Cydia pomonella, Hedya nubiferana, Pandemis heparana, A. curvella, A. pruniella, Lyonetia clerkella, Eupsilia transversa* et *Yponomeuta malinellus.*

3. Composition selon la revendication 2, dans laquelle la tordeuse est choisie dans le groupe *Argyresthia conjugella, Cydia pomonella, Hedya nubiferana* et *Pandemis heparana.*

4. Composition selon l'une quelconque des revendications précédentes, dans laquelle ladite composition comprend en outre un insecticide.

5. Composition selon l'une quelconque des revendications précédentes, dans laquelle ladite composition comprend en outre une phéromone.

6. Composition selon l'une quelconque des revendications précédentes, dans laquelle ladite composition comprend en outre un ou plusieurs additifs.

7. Composition selon la revendication 6, dans laquelle l'additif est choisi dans le groupe constitué par les émulsifiants, les antioxydants, les épaississants, les charges et les solvants.

8. Dispositif de piège à insectes comprenant la composition selon l'une quelconque des revendications 1 à 7.

9. Procédé pour surveiller, anéantir, piéger en masse et contrôler une tordeuse appartenant à l'ordre des lépidoptères, **caractérisé en ce qu'**il comprend les étapes consistant à fournir une composition selon l'une quelconque des revendications 1 à 7 dans un dispositif de piège à insectes.

10. Procédé selon la revendication 9, dans lequel la tordeuse est choisie dans le groupe constitué par *A. conjugella, Cydia pomonella, Hedya nubiferana, Pandemis heparana, A. curvella, A. pruniella, Lyonetia clerkella, Eupsilia transversa* et *Yponomeuta malinellus.*

11. Procédé selon la revendication 10, dans lequel la tordeuse est choisie dans le groupe constitué par *Argyresthia conjugella, Cydia pomonella, Hedya nubiferana* et *Pandemis heparana,* de préférence *Argyresthia conjugella, Cydia pomonella, Hedya nubiferana* et *Pandemis heparana.*

12. Procédé selon l'une quelconque des revendications 9 à 11, dans lequel le procédé comprend en outre les étapes consistant à recueillir et à compter le nombre de tordeuses présentes dans le piège.

13. Utilisation de la composition selon l'une quelconque des revendications 1 à 7 pour surveiller, anéantir, piéger en masse et contrôler une tordeuse appartenant à l'ordre des lépidoptères.

14. Utilisation de la composition selon l'une quelconque des revendications 1 à 7 pour réduire l'utilisation d'insecticides requis pour contrôler une infestation de cultures.

15. Utilisation selon la revendication 14, dans laquelle les cultures sont des pommes.
